# EUROPEAN PATENT SPECIFICATION

(11) **EP 3 962 694 B1**
(45) Date of publication and mention of the grant of the patent: **16.08.2023**
(21) Application number: 20731593.8
(22) Date of filing: 28.04.2020
(51) Int. Cl.: B23K 37/02, B23K 9/028, B23K 9/02

(54) **DEVICE AND METHOD FOR WELDING CYLINDRICAL SECTIONS OF A CASING**
VORRICHTUNG UND VERFAHREN ZUM SCHWEISSEN VON ZYLINDRISCHEN ABSCHNITTEN EINES GEHÄUSES
DISPOSITIF ET PROCÉDÉ DE SOUDAGE DE SECTIONS CYLINDRIQUES D'UN BOÎTIER

(30) Priority: 29.04.2019 NO 20190560
(43) Date of publication of application: 09.03.2022
(73) Proprietor: MOMEK SERVICES AS, 8601 Mo i Rana (NO)
(72) Inventor: JOHANSEN, Alexander, 8616 Mo I Rana (NO); BERSVENDSEN, Jørn, 4634 Kristansand (NO); KARLSEN, Finn Oscar, 4879 Grimstad (NO)
(74) Representative: Acapo AS
(86) International application number: PCT/NO2020/050105
(87) International publication number: WO 2020/222653

(56) References cited:
- WO-A1-01/81639
- CN-A- 108 436 349
- GB-A- 2 058 528
- KR-A- 20110 039 983
- KR-A- 20140 141 850
- US-A- 3 513 245
- US-A1- 2016 193 680
- US-A1- 2017 252 845

## Description

The invention relates to a device for welding together cylindrical sections of an electrode casing for a melting furnace, and a method for welding cylindrical sections of a casing by using such a device, according to the preamble of the independent claims.

The present invention relates to a device of the kind to be used upon joining of cylindrical casings of steel (such as window-, belly band, frame or section casing) in a continuously lowering electrode (the Söderberg electrode) used in electric melting furnaces. More preferred it is related to a method for welding by using a robot, wherein steel casing sections are welded to each other by using a welding robot.

In electric melting furnaces for melting metals, electrodes are used in the process. The electrodes conduct current and a high current intensity is induced which generates heat due to the resistance in the steel melt. The heat is generated by electricity and is necessary to start the metallurgical reactions.

The electrodes are often made of carbon and their function is to conduct energy to the reaction zone at the bottom of the furnace. The electrodes should have high mechanical strength, and thus the electrode paste is normally filled into the inside of a cylindrical steel casing. The steel casing is a formwork that holds the electrode paste together, and as the casing gets lowered into the furnace, the casing will get consumed due to the heat, so that a new casing section needs to be added at the top. The electrode paste which follows the casing downwards, will first melt to a liquid phase, before it is baked to a solid phase again at the end of the process. In the Söderberg method, the sections are provided with ribs, the ribs being rectangular plates which protrude inwards towards the centre of the casing. This helps the casing to conduct electricity better and to hold the baked electrode.

In the Söderberg method, the electrodes are lowered into the melt as they are eroded during the melting process. The lowering is made continuous, and electrode mass are added at the top. To hold the electrode mass together, sections of cylindrical pipes (casings) are added around the electrode mass. The steel casings are welded together in sections as the electrodes are lowered into the melting furnace.

An attemption has been made to solve this problem, for instance in CN 108436349, but the the robot described therein is arranged on a lifting system rather than on the steel casing itself. As the casing moves, the welding will not be correctly positioned, and must be repeated or replaced by manual welding. KR 20110039983 describes a robot having an arm used to weld along pre-programmed welding pats according to reference points, and a sensor is used to record any deviations. The system is however, not designed for and cannot be operated on a furnace electrode wherein the casing conduct current. US 2016/193680 discloses a pipeline welding device having a camera which however is arranged fixed relative to a robot base and not on an arm holding the welding gun.

The welding of the casing sections is at present performed manually. The work environment where the welding is performed may be dangerous and demanding due to heat, smoke, pollution, gas and open current conducting components i.a.

When considering the requirements for personal security and working environment of today, there is obviously a desire for automation and efficiency of such work.

The casings are lowered continuously as described above, but they may also move upwards occasionally. The temperature in the furnace must be stable, and therefore the electricity supply through the electrodes must be stable. The resistance is regulated by raising and lowering the electrode tip. In order to decrease the amount of electricity and thus the temperature, the electrode tip is lifted, and to increase the amount of electricity, and thus the temperature, the electrode is lowered. Normally three electrodes are used simultaneously in the same furnace, and the movement of each electrode is not predictable. The movements are not large, but the welding gun must be held steady in relation the casing, even during movements of the casing, in order to position the weld correctly.

The main object of the present invention is to overcome or at least reduce the effect of one or more of the disadvantages associated with the present technology. Another object is to provide a device for automating the welding process. Yet another object is to provide a device offering full inspection of the welds, preferably both during the welding and afterwards when the welding is complete. Yet another object is to provide a device which is moveable both in a circumferential and an axial direction in relation to the casing. A final object is to provide a device which may be used on both existing and new furnaces.

The above said objects are met by a device and a method according to the characterizing part of enclosed independent claims. Further optional features are stated in the dependent claims.

A device according to the present invention for welding cylindrical sections of casings, comprises
- a clamping ring configured to surround and attach to a section of the casing, and
- a robot provided with a welding gun and at least one joint,
wherein the robot is movably attached to the clamping ring by cooperating means.

By "clamping ring" it is, in the context of this application, meant a part shaped as a ring which comprises a mechanism for coupling the ring to the casing such that it is attached to and moves with the casing. In a preferred embodiment, the mechanisms comprises a clamping function, such as by adjusting the the circumference of the ring to clamp it onto a casing arranged in the centre of the ring. When the ring is clamped it surrounds at least the main part of circumference of the casing, and is fastened to it by the clamping.

In the Söderberg method described above, cylindrical sections are welded to each other, at the site of the melting furnace. The first (also referred to as lower) section is continuously lowered into the furnace, and a second (also referred to as upper) section is lifted on top of the first section and the sections are welded to each other. The casings may have ribs on the inside, and if this is the case, then the ribs must also be welded to each other. This is normally performed by moving the welding gun into the inside of the casing through a number of openings or windows in the casing. These windows are closed by welding a patch over the window when the ribs are welded.

In the following, the invention is described having the clamping ring attached to the first section of the casing, and then the robot will be directing upwards from the ring during welding. However, the clamping ring may also be attached to the second section before welding, and in such a case the robot will be hanging from the clamping ring, and being directed downwards to weld the connection between the sections.

In order to perform the welding, a clamping ring of a device according to the present invention may be clamped to the first section, which is lowered into the furnace. Once the second section is arranged in position, the robot is suitably positioned and may weld the sections together. The clamping ring and robot must be removed from the first section before the whole of the first section is lowered into the furnace.

In one embodiment, the clamping ring can be configured as a complete closed ring which has an initial diameter that is larger than that of the casing sections. The ring can be placed over the casing to surround it and a clamping mechanism activated to hold the ring in place at the desired height. The clamping mechanism can comprise one or more extendible legs or clamping elements configured to move into engagement with the outer surface of the casing section when extended to fix the clamping ring to the casing."

In another embodiment, the clamping ring is a broken ring having two ends, and the releasing and clamping may occur by adjusting the distance of the ends, and thus the circumference of the ring. In this embodiment the ring must be lifted over the upper part of the casing in order to be removed or added to the casing.

In yet another embodiment, the ring comprises two, three or more parts hinged to each other to at pivotable joints. The release may then be performed by pivoting one or more of the parts away from the casing, and the clamping may occur by attaching the parts to each other, and possibly adjusting the distance between the different parts. The attachment and adjusting of the ends or parts of the ring may be performed by one of a mechanic, hydraulic or pneumatic mechanism. The clamping must be sufficiently strong to carry the weight of the robot and to follow the movements of the casing.

The robot of the device according to the invention, is provided with a welding gun to perform the welding between the first casing, and the second casing arranged on top of the first casing. The robot is provided with a welding gun to perform the welding between the first casing to which the clamping ring is attached, and the second casing which is arranged on top of the first casing. In order to perform the welding sufficiently accurately, the robot has at least one joint to enable movement of the welding gun towards and away from the casing. Joints may be configured to cause rotation about an axis such that movement of each joint causes movement of the welding gun in a 2D plane. Two such joints may be present. In a preferred embodiment, three such joints are present and the axes of rotation of the joints are orthogonal. The welding gun may be moved in any direction by moving the gun using one or a combination of the three joints.

When for instance ribs on the inside of the casing should be welded, as described above, the robot must move through windows in the casing, and once inside the window, the welding gun should be able to move in all directions. Based on such needs, the robot is provided with more than six joints, to be able to direct the welding gun at the position to be welded. The optimal number of joints will be obvious to a skilled person once the type of casing, clamping ring and welding gun are known.

The movement of the robot may preferably be controlled by a controller, more preferably a remote controller. In a even more preferred embodiment, the movement or movements of the robot are preprogramed in a computer, and an operator is required to only initiate different sub-programmes, such as for instance a "welding ribs" sub-programme, a "welding circumference of the casing" sub-programme and possibly a "welding patches" sub-programme.

According to the invention, the robot comprises a camera directed towards the tip of the welding gun in order to monitor the casing being welded. The camera may also be used before the welding starts, in order to position the robot and welding gun precisely. In a preferred embodiment the direction of the camera may be remotely adjusted, if an operator desires to inspect surrounding parts of the casing. In yet another preferred embodiment, the movement of the robot is adjusted according to the image viewed through the camera, in order to position the welding gun correctly for welding.

The quality of welding is crucial for a continuous operation of the melting furnace, and therefore the possibility to inspect the quality of the welds may be necessary. In a preferred embodiment, the camera takes a picture of the area to be welded both before and after welding. The weld is inspected according to a given standard, and if the welding is not accurate a signal is provided to the operator. All pictures or videos taken can be saved for documentation.

The welding gun of the device according to the present invention may be any suitable welding gun, and the possibilities in terms of which welding gun to use will be obvious to a skilled person. In a preferred embodiment the welding gun has a long neck, possibly including one or more bends, and possibly being a goose neck, to provide easier access to the welding positions. Normally the welding gun needs welding wire, which can be supplied from a wire coil by a wire feeder.

The robot is movably attached to the clamping ring by cooperating means. The cooperating means provides attachment to prevent unintended removal of the robot, as well as to allow movement of the robot along the clamping ring. In this way the robot may move around the casing in a circular track to weld the casings together along their whole circumference. Depending on the clamping ring, the cooperating means attaching the robot to the ring, and the robot itself, the robot may not need to move completely around the circumference of the casings, but the welding gun must be able to move along the complete circumference.

The cooperating means may for instance comprise cooperating elements of the clamping ring and a counterpart on the robot, such as a feather and tongue joint, and the movement may be provided by rotating wheels and a motor. In a preferred embodiment, the cooperating means comprises mechanical, pneumatic, hydraulic or magnetic counterparts engaging each other. In a more preferred embodiment, the clamping ring and a part of the robot are further provided with teeth or similar to constitute a pair of gear rims, wherein the robot moves along the clamping ring when the gear rims engage each other. The gear rim of the robot may preferably be a driving gear wheel which engages with teeth on the gear of the clamping ring. The means to move the robot along the clamping ring may be powered by a motor arranged on the robot, or the clamping ring. The cooperating means may also be any combination of the means mentioned above.

In an alternative embodiment, the robot comprises an extra unit for welding patches. The extra unit is arranged to pick up patches from a storage, arrange a patch over a window of the casing, and hold the patch in place until the welding gun has fastened it to the casing. The extra unit may be removed from the patch following or during the completion of the welding of the patch to the casing.

In a preferred embodiment, the robot is arranged on a carriage, and the carriage is attached to, and moveable along the clamping ring. When a carriage is used, the above described cooperating means for attachment and movement comprises cooperation between elements of the carriage and clamping ring, rather than clamping ring and robot. In this embodiment the carriage may further include a motor to move the carriage, and thus the robot, along the clamping ring. The carriage may further carry other equipment such as patches to be welded onto the casing to close openings used to weld ribs on the inside as described above, and welding wire in a wire coil, one or more wire feeders and/or similar additional components.

The welding wire, welding coil, wire feeder, patches, motor and other parts may also be arranged outside of the clamping ring, for instance on a deck of the furnace, and supplied to the robot by lines and cables. Depending on the particular circumstances, the robot may be arranged to move around the casing a number of times, or only one round before it must return in the opposite direction. The latter may be advantageous when lines and cables are running to the robot from outside of the clamping ring.

With the present invention, there is provided a robotized solution for performing the welding process between the steel casings, by means of robotized operations.

On the steel casing there is fixed an adjustable and moveable clamping ring with cogs or teeth, following the movement of the casing. On this gear rim or ring of cogs, there is provided a carriage with guiding means and a motor with a cog wheel, or toothed wheel in engagement with the cogs or teeth of the gear rim. By means of motor and toothed wheel the carriage may be driven around the steel casing in a circular track. A robot having a number of arms and joints with axis control is arranged on the carriage. The robot is provided with a welding gun being controlled by the movements of the robot, which guides the welding gun in the desired track according to the welding operation.

To position the welding gun correctly, a camera is arranged on the arm holding the welding gun, and the camera communicates with the robot in such a way that the robot may be in an optimal position for the welding process.

In an alternative embodiment, the clamping ring and/or the robot is provided with hoisting means to move the clamping ring axially along the casing to hoist the robot into position for welding. In a preferred embodiment, a distal end of these means may be arranged to engage or attach to the upper end of a casing, and thereafter hoist the clamping ring. The hoisting means may be one or more bars protruding from the ring, and extending axially along the casing, wherein the upper end is arranged for engaging the upper edge of the casing section. The bars are preferably telescopic, and even more preferably are controlled remotely, wherein the ring may be hoisted once the upper ends are attached to the casing by retracting the bars. The bars may also be a part of the casing, wherein the clamping ring is provided with hosting means engaging the bars to move the ring axially along the casing. The hoisting means are preferably mechanical, pneumatic, hydraulic or magnetic means, such as hydraulically driven telescopic bars, or gear rims.

In an alternative embodiment, the hoisting means are wires, ropes, chains or similar which can be attached to an upper part of the second casing manually, and the clamping ring comprises a winch or similar to hoist the ring and thereby the robot into position.

When using embodiments comprising hoisting means, once the welding between a first and second casing is completed, the clamping ring may be released and hoisted by the hoisting means to position the robot to weld the two next casings, at which point it can be reattached to the casing in its new position. In this way the clamping ring must only be released, not be removed from the casing, and the amount of manually work is reduced to a minimum.

In one aspect, the welding process starts by mounting the carriage, robot and equipment at a starting point. Then a sequences starts, whereby the robot takes pictures to define a precise position before the welding process starts.

The welding gun is preferably supplied with power and gas through cables and tubes connected to a welding generator. In one embodiment the robot and welding gun are also arranged to weld on the inside of a cylindrical steel casing. This welding operation is performed through openings which are closed by robot welding after the welding operation on the inside is completed.

Once the welding operations are finished, the welding robot may be detached and moved to the next steel casing.

In one aspect, the invention relates to a device for welding of cylindrical sections of steel casing surrounding electrode mass of a continuously lowering electrode in an electric melting furnace. The welding of connections is performed with a robot, holding a welding gun, mounted on a carriage arranged on a gear rim fastened to the steel casing and with the motor with gear engagement to the gear rim.

In a preferred embodiment, the device further comprises a camera to position the welding gun, the camera is arranged at the welding gun.

In yet another aspect, the invention relates to a device for welding of cylindrical sections of steel casings in an electric melting furnace wherein a robot is connected to a carriage in engagement with a gear rim connected to the steel casing. The robot is provided with a welding gun for welding the weld between sections of the casing. The welding gun is preferably provided with a camera to position the welding process. The robot has a number of moveable axes being controlled by a robot axis controller.

In another aspect, the invention relates to a method for welding together cylindrical sections of casing using the device described above. The method comprises the steps of
a) positioning and clamping the clamping ring at the correct position,
b) moving the robot along the clamping ring to the correct position for welding,
c) welding the sections to each other by the welding gun of the robot, and
d) releasing the clamping ring.

The steps may be repeated separately or in order until the sections are sufficiently welded.

In an alternative embodiment of the method, when the casings have windows and ribs to be welded on the inside, the method further comprises the step of welding a patch over the window.

In an alternative embodiment, the method further comprises the step of taking and processing pictures as well as repositioning the clamping ring and/or robot.

The method may comprise the step of repositioning the robot and/or the clamping ring based on, or in response to the pictures taken by the camera. Further, the method may also comprise the step of comparing the pictures taken by the camera to a given standard, and then giving a signal to an operator if the pictures taken deviate from the standard beyond a given limit. Pictures of the weld can, for example, be compared to pictures of an ideal weld and certain properties of the two images, such as the thickness or consistency of the welds, can be determined using image processing techniques and compared to decide whether the current weld falls within required limits. The pictures taken may be transferred for saving and documentation, such as to a data storage device.

In an alternative embodiment of the method, wherein the device comprises hoisting means, the method further comprises the step of attaching the hoisting means to the casing, and further possibly the step of extending and retracting the hoisting means. Reference throughout the specification to "one embodiment" or "an embodiment" "one aspect" or "an aspect" means that a particular feature, structure, or characteristic described in connection with an embodiment and/or aspect is included in at least one embodiment of the subject matter disclosed. Thus, the appearance of the phrases "in one embodiment" or "in an embodiment", or "in one aspect" or "in an aspect" in various places throughout the specification is not necessarily referring to the same embodiment. Further, the particular features, structures or characteristics may be combined in any suitable manner in one or more embodiments.

### Description of the figure

The invention will now be described with the help of the enclosed Figures, showing a preferred embodiment of a device according to the invention. The different parts of the figure are not necessarily to scale in relation to each other, as the diagram is merely for illustrating the invention.

The following description of an exemplary embodiment refers to the drawing, and the following detailed description is not meant or intended to limit the invention. Instead, the scope of the invention is defined by the appended claims.

### Example

In the following an example of a preferred embodiment of welding casings through an opening is described, by way of the following drawings wherein;
Fig 1 shows a welding robot arranged and ready for assignments,
Fig 2 shows detail of a welding robot mounted on a carriage and gear rim,
Fig 3 shows another embodiment of a clamping ring with a carriage and robot seen from above,
Fig 4 shows another embodiment of a clamping ring with a carriage and robot seen perspective from above, and
Fig 5 shows details of the carriage shown in Figure 4.

In the Figures, reference number 1 refers to a melting furnace having electrodes 2 being lowered into the melt 3. The electrodes consist of electrode mass which is added from the top 4 as the electrodes 2 are lowered continuously. To hold the electrode mass cylindrical sections of steel casing 12 are added with welded connections 8 between the sections. The steel casings 12 are provided with internal ribs 5 and holes 14 for access to enable welding of the connection 8.

For welding the connection 8 a robot 6 is being used, which is arranged on a carriage 25 driven by an electromotor 26 and connected to a gear rim 9 with gear wheel and guiding means 10 on both sides of the cogging, in such a way that the carriage 25 may be driven in a circular track around the casing 12.

The robot 6 is connected to the carriage 25 through the adapter 23, and may be rotated around axis 21. The joint 27 may be rotated around axis 22 and is connected to the arm 28, which is connected through the joint 30 rotatable around axis 24 to the arm 29 and the joint 31 rotatable around axis 35. The joint 31 is rotatable around axis 35 and is connected to the welding gun 32. A camera 33 is arranged close behind the welding gun 32 and provides for photographing of the welding area, in such a way that the welding gun may be positioned correctly.

Welding of the inside of the casing may be provided through the gap/opening 14 which afterwards are closed by welding by the robot.

The welding gun 32 and robot 6 receive power and gas through cables and tubes 40 connected to a welding apparatus 41.

Arranging the welding robot 6 in position for welding is performed manually by means of remote control from a panel 51 which is operated by a person 50 located on a deck 7 over the melting furnace 1.

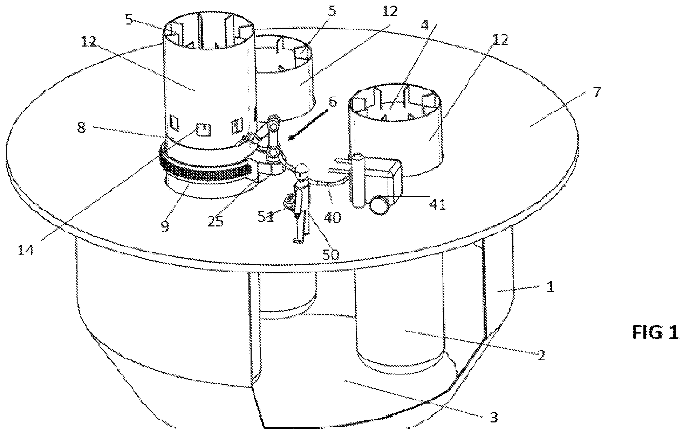

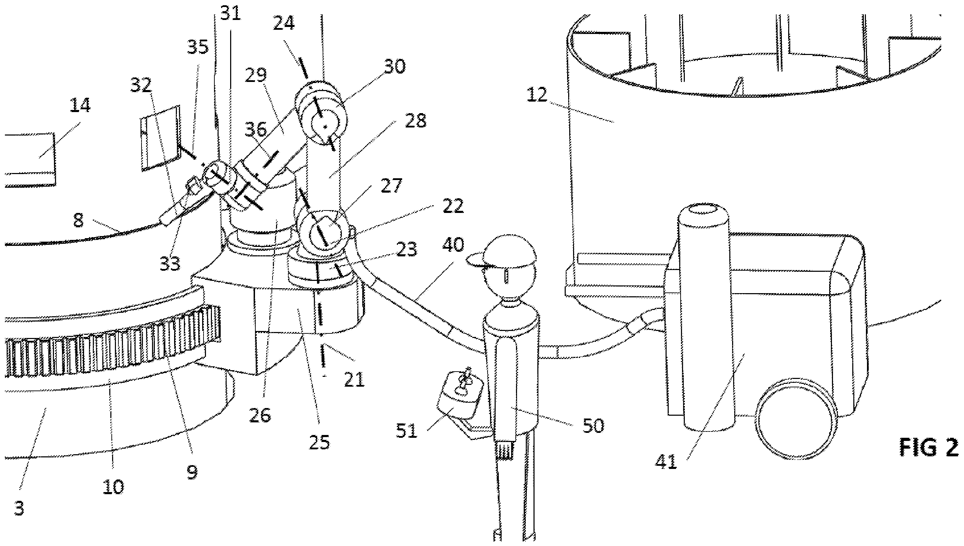

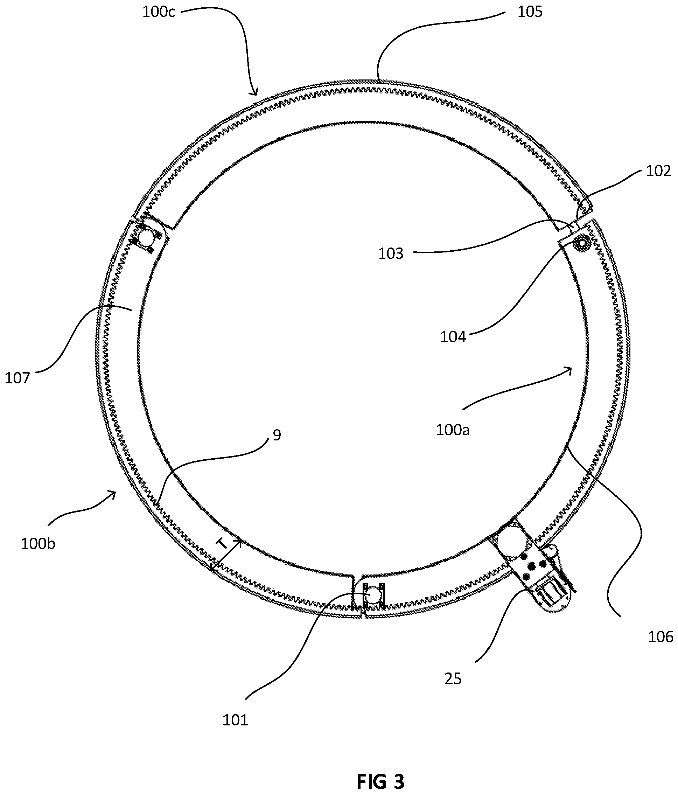

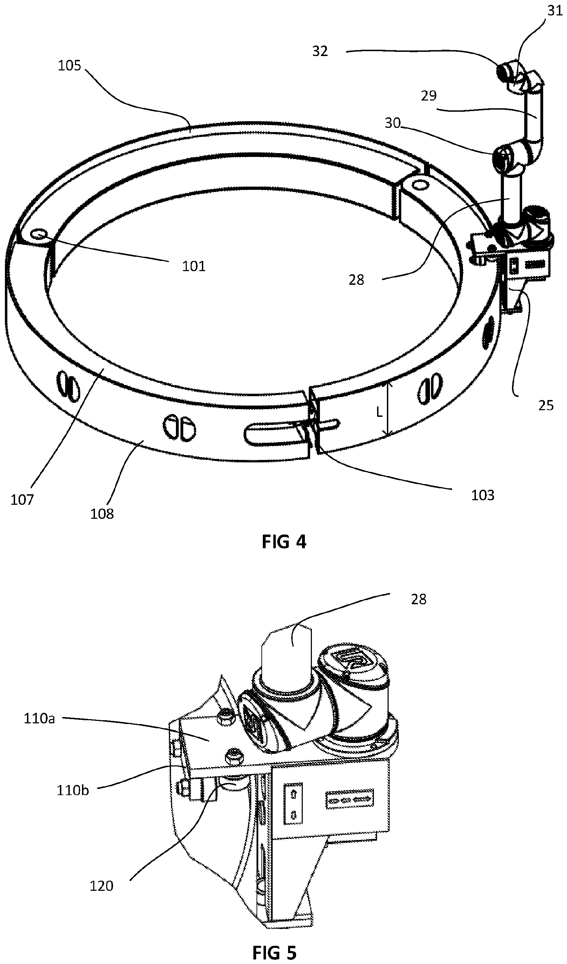

In the Figures a device is shown for welding cylindrical sections of a casing 12. The device comprises a clamping ring, shown as a gear rim 9 and a guide 10 in Figures 1 and 2, and as a three parted ring in Figures 3 and 4. In other embodiments, the ring may be divided into two more more than three parts. The device further comprises a robot 6 attached to the clamping ring by cooperating means, shown as a gear rim on the clamping ring and another gear rim on the carriage 25 in Figures 1-3. The gear rim on the carriage is driven by a motor 26, causing the carriage to move along the clamping ring.

In the embodiment shown in Figures 1 and 2, cables 40 runn from the robot and carriage to a welding apparatus 41 on the deck, and thus the robot can only rotate one time around the casing 12 before changing direction to return to the starting point, in order to avoid stretch on the cables. Alternatively, the welding apparatus must be moved according to the movement of the carriage.

Figures 3 and 4 show details of a second and third embodiment of the clamping ring 100. The ring comprises three parts 100a, 100b, 100c, wherein the parts are hinged to each other by way of two hinges 101, in such a way that the clamping ring has two ends 102. A bar 103 is arranged between the two ends 102, being fixed to one end, and attached to a tightening system 104 on the other end. In the shown embodiment the tightening system is only indicated by a circle, but it may be any suitable hydraulic, pneumatic or mechanical system configured to clamp the ring around the section, by reducing the distance between the ends of the ring.

When the ring is to be arranged around a casing section, the parts 100a, 100b and 100c are pivoted to enclose the casing 12, and the bar 103 is inserted into the tightening system 104. Then the system 104 tightens the ring by reducing the distance between the ends 102 of the ring 100 until the ring is clamped onto the casing sufficiently to carry the load of the robot 6 and/or carriage 25 while following any movement of the casing. If the ring is to be removed from the casing, the steps are repeated in reversed order.

In embodiments wherein parts of the ring can not be pivoted in relation to each other, the ring may for instance be lifted above and lowered onto the casing. Once arranged around the casing, it may be tightened as described above.

In the embodiments of the clamping ring shown in Figures 3 and 4, the ring has a thickness T in radial direction and a length L in axial direction, and further an upper 105 and lower 108 peripheral flange, at a distance from the inner edge 106 of the clamping ring being configured to be in contact with the casing. The flanges 106, 108 are parallel to the casing and create an upward facing shelf 107, and an downward facing self (not shown). The carriage is attached to the clamping ring by elements 110 enclosing the upper and lower peripheral flange, and wheels running along the upper and/or lower flange.

In the embodiment shown in Figure 3, the clamping ring 100 is provided with a gear rim 9 on the peripheral flange 105, the gear rim is arranged radially, and facing inwards towards the casing. The carriage is provided with a corresponding gear wheel (not shown) engaging the gear rim 9. The gear wheel on the carriage is a driving gear wheel, and is driven by a motor (not shown).

In the embodiment shown in Figures 4 and 5, the carriage is provided with wheels 120 being parallel to the shelf 107, wherein the wheels engage the peripheral flange 105, and as the wheels rotate, the carriage will move along the clamping ring.

In the embodiment shown in Fig. 5, the elements 110 which attaches the carriage 25 to the flange 105/108, comprises a first plate 110a protruding from the carriage 25 towards the casing, and a second plate 110b protruding from a distal end of the first plate towards the shelf 107. Once the carriage is attached to the clamping ring, the free end of the second plate 110b is close to the shelf, and thus the two plates 110a, 110b enclose the upper 105 respectively lower 108 peripheral flange. The wheels 120 providing movement along the ring 100, is attached to the upper plate 110a, and is driven by a motor (not shown). A similar structure may be present to enclose the lower flange 108. Alternatively, only the upper flange 105 may be present, with the carriage supported by elements 110 extending around the upper flange and further supported against the outward facing surface of the clamping ring by means of a wheel or another supporting element.

In an example not shown in the Figures, the lower peripheral flange 108 may also be provided with a gear rim, or the carriage may be provided with wheels engaging the lower flange.

When the embodiments shown are to be used to weld cylindrical sections of a casing, the method comprises the following steps
- positioning the clamping ring 100 in relation to the windows of the casing and/or the connection between two adjacent casings sections,
- bringing the ends 101 of the ring 100 towards each other in order to tighten the ring,
- moving the carriage 25 along the ring 100, to position the robot correctly at the site of welding, the carriage being moved by powering the driving wheels on the carriage,
- welding the sections of the casing, and possibly the ribs 5 of the sections together, while moving the carriage along the ring, and by moving the arms 28, 29 and joints 27, 30, 31 of the robot,
- releasing the clamping ring from the casing by bringing the ends 101 apart from each other, in order to reposition the ring at a new welding site.

If the ring is not arranged on the casing before the method is to be used, then the ring 100 must be positioned around the casing previously to the first step.

The examples above are given to illustrate the invention, and should not be used to interpret the following claims in a limited manner. The scope of the invention is not limited by the examples given above, but by the following claims.

## Claims

1. A device for welding together cylindrical sections of an electrode casing (12) for a melting furnace (1), wherein the device comprises
- a clamping ring (9, 10; 100) configured to surround and attach to a section of the casing (12) and
- a robot (6) provided with a welding gun (32)
wherein the robot is movably attached to the clamping ring by cooperating means, **characterized in that** the robot (6) is provided with six or more joints (27, 30, 31) wherein the pivotal axes (22, 24, 35) of the joints are arranged perpendicular to each other,
a camera (33) is arranged on an arm (28) holding the welding gun (32),
wherein the camera, in use, communicates with the robot (6),
such that the device is arranged to adjust the position of the robot (6) according to the image viewed through the camera (33), in order to position the welding gun (32) correctly for welding.

2. A device according to claim 1, wherein the cooperating means are configured to guide the robot around the outside of the casing (12) along the ring (9, 10; 100).

3. A device according to claim 1 or 2, wherein the circumference of the clamping ring (9, 10; 100) may be adjusted by a mechanical, hydraulic or pneumatic mechanism.

4. A device according to any one of claims 1 to 3, wherein the clamping ring (100) comprises two or more parts (100a, 100b, 100c), connected to each other by one or more hinges (101).

5. A device according to any of claims 1 and 2, wherein the clamping ring extends all of the way around the casing as a closed ring.

6. A device according to any one of the preceding claims, wherein the cooperating means are mechanical, pneumatic, hydraulic or magnetic counterparts arranged on the clamping ring and robot, the counterparts being configured to engage each other.

7. A device according to claim 6, wherein the cooperating means are gear rims, and that the gear rim of the robot is a driving gear wheel.

8. A device according to any of the preceding claims, wherein a carriage (25) is attached to the clamping ring (9, 10; 100) by the cooperating means, and the robot (6) is attached to the carriage (25).

9. A device according to any of the preceding claims, wherein the clamping ring and/or robot is provided with hoisting means.

10. A device according to claim 9, wherein a distal end of the hoisting means is configured to engage a second section of the casing.

11. A device according to claim 1, wherein the electrode casing is a Söderberg casing.

12. Method for welding cylindrical sections of a casing (12) by using the device according any one of claims 1-11, the method comprising the steps of
a) positioning and clamping the clamping ring (9, 10; 100) at the correct position,
b) moving the robot (6) along the clamping ring to the correct position for welding,
c) welding the sections to each other by the welding gun of the robot, and
d) releasing the clamping ring.

13. Method according to claim 12, further comprising a step of welding a patch over any windows of the casing.

14. Method according to claim 12 or 13, the method further comprises the step of taking pictures with the camera (33) and repositioning the clamping ring and/or robot based on the processing.

15. Method according to any one of claims 12-14, wherein the device comprises hoisting means, and the method further comprises the step of attaching the hoisting means to the casing.

## Patentansprüche

1. Vorrichtung zum Zusammenschweißen von zylindrischen Abschnitten eines Elektrodengehäuses (12) für einen Schmelzofen (1), wobei die Vorrichtung Folgendes umfasst:
- einen Klemmring (9, 10; 100), der so konfiguriert ist, dass er einen Abschnitt des Gehäuses (12) umgibt und daran angebracht ist und
- einen Roboter (6), der mit einer Schweißpistole (32) versehen ist
wobei der Roboter durch zusammenwirkende Mittel beweglich an dem Klemmring angebracht ist,
**dadurch gekennzeichnet, dass** der Roboter (6) mit sechs oder mehr Gelenken (27, 30, 31) versehen ist,
wobei die Schwenkachsen (22, 24, 35) der Gelenke senkrecht zueinander angeordnet sind,
eine Kamera (33) an einem Arm (28) angeordnet ist, der die Schweißpistole (32) hält,
wobei die Kamera im Gebrauch mit dem Roboter (6) kommuniziert, derart, dass die Vorrichtung so angeordnet ist, dass sie die Position des Roboters (6) entsprechend dem durch die Kamera (33) betrachteten Bild anpasst, um die Schweißpistole (32) zum Schweißen korrekt zu positionieren.

2. Vorrichtung nach Anspruch 1, wobei die zusammenwirkenden Mittel konfiguriert sind, um den Roboter um die Außenseite des Gehäuses (12) entlang des Rings (9, 10; 100) zu führen.

3. Vorrichtung nach Anspruch 1 oder 2, wobei der Umfang des Klemmrings (9, 10; 100) durch einen mechanischen, hydraulischen oder pneumatischen Mechanismus eingestellt werden kann.

4. Vorrichtung nach einem der Ansprüche 1 bis 3, wobei der Klemmring (100) zwei oder mehr Teile (100a, 100b, 100c) umfasst, die durch ein oder mehrere Scharniere (101) miteinander verbunden sind.

5. Vorrichtung nach einem der Ansprüche 1 und 2, wobei sich der Klemmring ganz um das Gehäuse herum als geschlossener Ring erstreckt.

6. Vorrichtung nach einem der vorhergehenden Ansprüche, wobei die zusammenwirkenden Mittel mechanische, pneumatische, hydraulische oder magnetische Gegenstücke sind, die auf dem Klemmring und dem Roboter angeordnet sind, wobei die Gegenstücke so konfiguriert sind, dass sie ineinander eingreifen.

7. Vorrichtung nach Anspruch 6, wobei die zusammenwirkenden Mittel Zahnkränze sind, und dass der Zahnkranz des Roboters ein Antriebszahnrad ist.

8. Vorrichtung nach einem der vorhergehenden Ansprüche, wobei ein Schlitten (25) durch die zusammenwirkenden Mittel an dem Klemmring (9, 10; 100) angebracht ist, und der Roboter (6) an dem Schlitten (25) angebracht ist.

9. Vorrichtung nach einem der vorhergehenden Ansprüche, wobei der Klemmring und/oder der Roboter mit Hebemitteln versehen sind.

10. Vorrichtung nach Anspruch 9, wobei ein distales Ende der Hebemittel so konfiguriert ist, dass es in einen zweiten Abschnitt des Gehäuses eingreift.

11. Vorrichtung nach Anspruch 1, wobei das Elektrodengehäuse ein Söderberg-Gehäuse ist.

12. Verfahren zum Schweißen von zylindrischen Abschnitten eines Gehäuses (12) unter Verwendung der Vorrichtung nach einem der Ansprüche 1 bis 11, wobei das Verfahren die folgenden Schritte umfasst:
a) Positionieren und Festklemmen des Klemmrings (9, 10; 100) an der korrekten Position,
b) Bewegen des Roboters (6) entlang des Klemmrings in die korrekte Position zum Schweißen,
c) Zusammenschweißen der Abschnitte mittels der Schweißpistole des Roboters, und
d) Lösen des Klemmrings.

13. Verfahren nach Anspruch 12, ferner umfassend einen Schritt des Schweißens eines Patch über jedes Fenster des Gehäuses.

14. Verfahren nach Anspruch 12 oder 13, wobei das Verfahren ferner den Schritt des Aufnehmens von Bildern mit der Kamera (33) und des Neupositionierens des Klemmrings und/oder des Roboters auf der Grundlage der Verarbeitung umfasst.

15. Verfahren nach einem der Ansprüche 12 bis 14, wobei die Vorrichtung Hebemittel umfasst, und das Verfahren ferner den Schritt des Anbringens der Hebemittel am Gehäuse umfasst.

## Revendications

1. Dispositif pour souder ensemble des sections cylindriques d'un boîtier d'électrode (12) pour un four de fusion (1), dans lequel le dispositif comprend
- une bague de serrage (9, 10 ; 100) configurée pour entourer une section du boîtier (12) et se fixer à celui-ci et
- un robot (6) doté d'un pistolet de soudage (32)
dans lequel le robot est fixé de manière mobile à la bague de serrage par des moyens de coopération,
**caractérisé en ce que** le robot (6) est doté de six articulations (27, 30, 31) ou plus
dans lequel les axes pivotants (22, 24, 35) des articulations sont agencés perpendiculairement les uns aux autres,
une caméra (33) est agencée sur un bras (28) retenant le pistolet de soudage (32),
dans lequel la caméra, lors d'une utilisation, communique avec le robot (6), de telle sorte que le dispositif est agencé pour ajuster la position du robot (6) selon l'image visualisée à travers la caméra (33), afin de positionner le pistolet de soudage (32) correctement pour un soudage.

2. Dispositif selon la revendication 1, dans lequel les moyens de coopération sont configurés pour guider le robot autour de l'extérieur du boîtier (12) le long de la bague (9, 10 ; 100).

3. Dispositif selon la revendication 1 ou 2, dans lequel la circonférence de la bague de serrage (9, 10 ; 100) peut être ajustée par un mécanisme mécanique, hydraulique ou pneumatique.

4. Dispositif selon l'une quelconque des revendications 1 à 3, dans lequel la bague de serrage (100) comprend deux parties ou plus (100a, 100b, 100c), reliées entre elles par une ou plusieurs charnières (101).

5. Dispositif selon l'une quelconque des revendications 1 et 2, dans lequel la bague de serrage s'étend jusqu'au bout autour du boîtier en tant que bague fermée.

6. Dispositif selon l'une quelconque des revendications précédentes, dans lequel les moyens de coopération sont des contreparties mécaniques, pneumatiques, hydrauliques ou magnétiques agencées sur la bague de serrage et le robot, les contreparties étant configurées pour se mettre en prise entre elles.

7. Dispositif selon la revendication 6, dans lequel les moyens de coopération sont des couronnes dentées, et en ce que la couronne dentée du robot est une roue dentée motrice.

8. Dispositif selon l'une quelconque des revendications précédentes, dans lequel un chariot (25) est fixé à la bague de serrage (9, 10 ; 100) par les moyens de coopération, et le robot (6) est fixé au chariot (25).

9. Dispositif selon l'une quelconque des revendications précédentes, dans lequel la bague de serrage et/ou le robot sont dotés de moyens de levage.

10. Dispositif selon la revendication 9, dans lequel une extrémité distale des moyens de levage est configurée pour se mettre en prise avec une seconde section du boîtier.

11. Dispositif selon la revendication 1, dans lequel le boîtier d'électrode est un boîtier de Söderberg.

12. Procédé pour souder des sections cylindriques d'un boîtier (12) en utilisant le dispositif selon l'une quelconque des revendications 1 à 11, le procédé comprenant les étapes consistant à
a) positionner et serrer la bague de serrage (9, 10 ; 100) au niveau de la bonne position,
b) déplacer le robot (6) le long de la bague de serrage vers la bonne position pour un soudage,
c) souder les sections entre elles par le pistolet de soudage du robot, et
d) desserrer la bague de serrage.

13. Procédé selon la revendication 12, comprenant en outre une étape consistant à souder un patch par-dessus de quelconques fenêtres du boîtier.

14. Procédé selon la revendication 12 ou 13, le procédé comprenant en outre l'étape consistant à prendre des images avec la caméra (33) et repositionner la bague de serrage et/ou le robot sur la base du traitement.

15. Procédé selon l'une quelconque des revendications 12 à 14, dans lequel le dispositif comprend des moyens de levage, et le procédé comprend en outre l'étape consistant à fixer les moyens de levage au boîtier.
